# EUROPEAN PATENT SPECIFICATION

(11) **EP 0 877 545 B1**
(45) Date of publication and mention of the grant of the patent: **06.10.1999**
(21) Application number: 97901175.6
(22) Date of filing: 24.01.1997
(51) Int. Cl.: A01G 9/12

(54) **STAKE SUPPORTING APPARATUS FOR PLANTS**
HALTEVORRICHTUNG FÜR STÜTZEN FÜR PFLANZEN
APPAREIL DE SUPPORT DE BOUTURES POUR PLANTES

(30) Priority: 02.02.1996 GB 9602372; 02.12.1996 GB 9625036
(43) Date of publication of application: 18.11.1998
(73) Proprietor: Brinkhurst, Norman Eric, Hailsham, East Sussex BN27 1UG (GB)
(72) Inventor: Brinkhurst, Norman Eric, Hailsham, East Sussex BN27 1UG (GB)
(74) Representative: Fry, Alan Valentine
(86) International application number: GB9700206
(87) International publication number: WO9727732

(56) References cited:
- GB-A- 2 200 024

## Description

This invention relates to stake supporting apparatus for plants and more especially for use with plants bedded in a growing medium contained within a sealed plastic bag (hereinafter referred to as a "grow-bag").

Grow-bags are used extensively to foster plant growth. One problem to be found when using grow-bags is that the depth of growing medium is insufficient to support stakes which may be required to support plants as their growth advances. This is, of course, particularly the case when a grow-bag is supported on a hard surface such as a patio or a greenhouse table which prevents penetration of a stake beyond the base of the bag. If grow-bags are placed on soil or other surfaces into which stakes can penetrate the opening created by the stake as it passes through the grow-bag base enables moisture to be lost from the bag which, over a period of time, can be detrimental to plant growth.

GB-A-2200024A discloses a growing bag platform and cane support-with drainage holes which comprises a rectangular base with detachable cross lateral tubular uprights for supporting canes for climbing plants in grow-bags. The tubular uprights are of uniform cross-section over their entire heights and are formed with holes or slots to allow for excess liquid drainage.

The present invention sets out to provide improved plant support apparatus for use with grow-bags which does not suffer from, or at least alleviates, the disadvantages discussed above.

According to the present invention in one aspect there is provided stake supporting apparatus for plants which comprises a base and a tubular stake support of circular cross-section upstanding from the base the apparatus being characterised in that the outer surface of the tubular stake support is tapered with the diameter of the tubular stake support progressively increasing to a maximum at its base whereby the boundary of the opening formed in the base of a grow-bag is stretched as it passes along the tubular stake support to define a tight fit therewith.

Two or more tubular stake supports may be upstanding from the base. These tubular supports may be formed integral with the base or may be detachably connected thereto.

The shape of the base may, for example, be circular, square or rectangular. One or more apertures may be formed in the base capable of receiving a stake holder or stake holders of another stake supporting apparatus for stacking purposes.

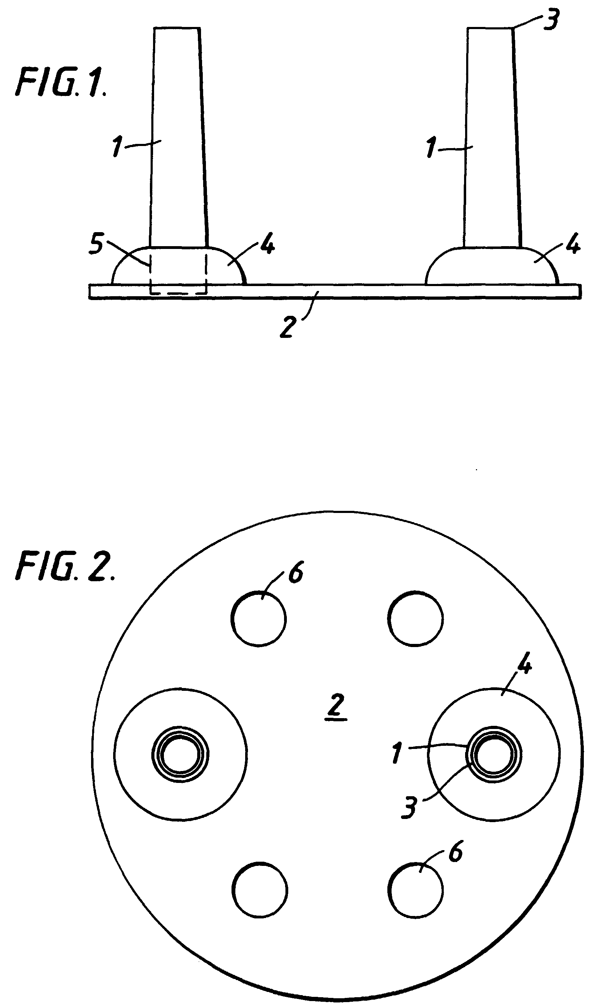

The invention will now be described by way of example only with reference to the accompanying diagrammatic drawings in which:-
Figure 1 is side view in section of stake supporting apparatus in accordance with the invention; and

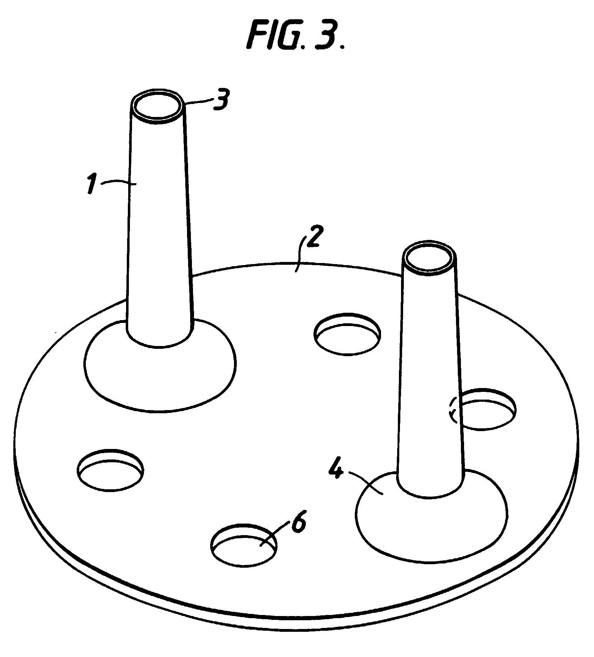

Figures 2 and 3 are respectively plan and isometric views of the apparatus illustrated in Figure 1.

As will be seen from the drawings, the apparatus has two tubular stake supports 1 upstanding from a generally circular base 2. The upper end 3 of each tubular support 1 is sharpened to define a cutting edge and the supports are tapered outwardly from their upper ends to define a progressive increase in diameter along the length of the support from its upper end to its lower end. In an alternative arrangement, the taper extends only over the lower section of each support 1. The stake supports 1 may be formed integral with the base 2 or may be separable therefrom.

The width of the base is sufficient to provide adequate lateral stability to the stake holders.

Semi-spherical dome-like projections 4 project upwardly from the surface of the base to surround the lower end of each tubular stake holder thereby raising the level of the base in the immediate vicinity of each support 1. Bores 5 formed in the projections provide anchors for the tubular stake supports 1 thereby preventing or minimising lateral movement in use. The projections may be hollow or solid in cross section and may be either open or close-ended. These projections 4 may be formed integral with the base 2 and/or supports 1 or may be separable therefrom. The base includes four apertures 6 for ease of stacking.

The apparatus may be produced from plastics, metal or indeed any other suitable material and the base may be circular, square or rectangular. Other shapes may however be adopted. The height of each stake support 1 is generally greater than the thickness of any grow-bag to be supported thereby. Each stake holder may protrude to a position just above the upper surface of the grow-bag or to a height of, say, four or five feet (1.22 or 1.53m) above the grow bag surface. In the former case, the intention is to place one end of a stake (eg a cane) in the bore of the stake support. Wedges may be provided to hold a cane tightly within the holder. In the latter case, the upstanding holder may itself define a supporting stake for a plant.

In use, the base 2 supports the under surface of a grow-bag with the tubular stake supports 1 penetrating and passing through the upper and lower surfaces of the bag. Removable caps may be provided to prevent growing medium entering the tubular supports as these pass through the grow-bag. These caps may be pointed to assist the penetration process. The taper applied to the tubular supports 1 ensures a close fit between the under surface of the grow-bag and the support, and the raised projections 4 on the base act to lift the boundaries of the holes pierced in the base of the bag. The applied taper and the projections act to prevent, or at least inhibit, loss of moisture and water from the bag interior. Stakes, e.g. canes, are then positioned within the supports 1.

It will be appreciated that the foregoing is merely exemplary of plant support apparatus in accordance with the invention and that various modifications can be made thereto without departing from the scope of the invention as set out in the appended claims. Thus, one or more than two tubular supports 1 may be upstanding from the base 1.

## Claims

1. Stake support apparatus for plants which comprises a base (2) and a tubular stake support (1) of circular cross-section upstanding from the base, the apparatus being characterised in that the outer surface of the tubular stake support is tapered with the diameter of the tubular stake support (1) progressively increasing to a maximum at its base (2) whereby the boundary of the opening formed in the base of a grow-bag is stretched as it passes along the tubular stake support to define a tight fit therewith.

2. A support as claimed in Claim 1 wherein the surface (4) of the base which surrounds the lower end of the stake support is raised to lift the opening formed in the undersurface of the grow-bag to a height which is above the level of the base when a grow-bag is supported thereon.

3. Support apparatus as claimed in claim 1 or claim 2 wherein two or more tubular stake supports are upstanding from the base.

4. Support apparatus as claimed in any one of the preceding Claims wherein the or each tubular support is integral with the base.

5. Support apparatus as claimed in any one of Claims 1 to 4 wherein the or each tubular support is detachably connected to the base.

6. Support apparatus as claimed in any one of the preceding Claims wherein the shape of the base is circular.

7. Support apparatus as claimed in any one of the preceding Claims wherein one or more apertures are formed in the base capable of receiving a stake holder or stake holders of another stake supporting apparatus for stacking purposes.

## Patentansprüche

1. Pfahlstützvorrichtung für Pflanzen, die eine Basis (2) und eine röhrenförmige Pfahlstütze (1) mit rundem Querschnitt, die von der Basis absteht, aufweist, dadurch gekennzeichnet, dass die Außenoberfläche der röhrenförmigen Pfahlstütze kegelförmig ist, wobei sich der Durchmesser der röhrenförmigen Pfahlstütze bis zu einem Maximum an seiner Basis (2) zunehmend vergrößert, wodurch der Rand des Loches, das sich in der Basis eines Pflanzbeutels bildet, wenn dieser die röhrenförmige Pfahlstütze entlang rutscht, aufgedehnt wird, um mit dieser einen engen Paßsitz zu bilden.

2. Pfahlstützvorrichtung nach Anspruch 1, dadurch gekennzeichnet, dass die Oberfläche (4) der Basis, die das untere Ende der Pfahlstütze umschließt, erhöht ist, um das Loch, das sich in der unteren Oberfläche des Pflanzbeutels bildet, auf eine Höhe anzuheben, die über der Ebene der Basis liegt, wenn ein Pflanzbeutel darauf gehalten wird.

3. Pfahlstützvorrichtung nach den Ansprüchen 1 und 2, dadurch gekennzeichnet, dass zwei oder mehr röhrenförmige Pfahlstützen von der Basis abstehen.

4. Pfahlstützvorrichtung nach einem der vorhergehenden Ansprüche, dadurch gekennzeichnet, dass die oder jede röhrenförmige Stütze mit der Basis fest verbunden ist.

5. Pfahlstützvorrichtung nach einem der Ansprüche 1 bis 4, dadurch gekennzeichnet, dass die oder jede röhrenförmige Stütze abnehmbar mit der Basis verbunden ist.

6. Pfahlstützvorrichtung nach einem der vorhergehenden Ansprüche, dadurch gekennzeichnet, dass die Basis eine runde Form aufweist.

7. Pfahlstützvorrichtung nach einem der vorhergehenden Ansprüche, dadurch gekennzeichnet, dass eine oder mehrere Aussparungen in der Basis vorgesehen sind, um die Aufnahme einer Pfahlhalterung oder von Pfahlhalterungen einer anderen Pfahlstützvorrichtung zu Stapelzwecken zu ermöglichen.

## Revendications

1. Appareil de support de boutures pour plantes gui comprend une base (2) et un support tubulaire de tuteur (1) de section transversale circulaire s'élevant depuis la base vers le haut, l'appareil étant caractérisé en ce que la surface externe du support tubulaire de tuteur est effilée avec le diamètre du support tubulaire de tuteur (1) augmentant progressivement jusqu'à un maximum à sa base (2) de sorte que la limite de l'ouverture formée dans la base d'un sac de croissance est tendue lorsqu'elle passe le long du support tubulaire de tuteur pour définir un joint étanche avec celui-ci.

2. Un appareil de support selon la revendication 1 dans lequel la surface (4) de la base qui entoure l'extrémité inférieure du support de tuteur est relevée pour soulever l'ouverture formée dans la sous-surface du sac de croissance jusqu'à une hauteur qui est au-dessus du niveau de la base lorsqu'un sac de croissance est soutenue par celle-ci.

3. Appareil de support selon la revendication 1 ou la revendication 2 selon lequel deux ou davantage de supports tubulaires de tuteur s'élèvent depuis la base.

4. Appareil de support selon l'une quelconque des revendications précédentes dans lequel le ou chaque support de tuteur fait partie intégrante avec la base.

5. Appareil de support selon l'une quelconque des revendications 1 à 4 dans lequel le ou chaque support tubulaire de tuteur est raccordé de façon détachable à la base.

6. Appareil de support selon l'une quelconque des revendications précédentes dans lequel la forme de la base est circulaire.

7. Appareil de support selon l'une quelconque des revendications précédentes dans lequel une ou plusieurs ouvertures sont formées dans la base capable de recevoir un dispositif de support de tuteur ou des dispositifs de support de tuteur d'un autre appareil de support de boutures dans des buts d'empilement.
